# EUROPÄISCHE PATENTSCHRIFT

(11) **EP 1 511 150 B1**
(45) Veröffentlichungstag und Bekanntmachung des Hinweises auf die Patenterteilung: **20.10.2010**
(21) Anmeldenummer: 03103224.6
(22) Anmeldetag: 26.08.2003
(51) Int. Cl.: H02J 1/14

(54) **Einrichtung und Verfahren zur Steuerung der Versorgung von elektrischen Verbrauchern**
Method and device for controlling power supply to electrical consumers
Procédé et dispositif pour commander l'alimentation de consommateurs éléctriques

(43) Veröffentlichungstag der Anmeldung: 02.03.2005
(73) Patentinhaber: Ford Global Technologies, LLC, A subsidary of Ford Motor Company, Dearborn, MI 48126 (US)
(72) Erfinder: Gaedt, Lutz Peter, 52499, Baesweiler (DE); Spijker, Engbert, 6361, BR Nuth (NL); Kok, Daniel Benjamin, 6343 CA, Klimmen (NL); Rienks, Maurice, 6291 CJ, Vaals (NL)
(74) Vertreter: Drömer, Hans-Carsten

(56) Entgegenhaltungen:
- DE-A- 3 422 300
- DE-A- 19 955 406
- US-A- 4 829 159

## Beschreibung

Die Erfindung betrifft eine Einrichtung zur Steuerung der Versorgung von Verbrauchern mit elektrischer Leistung aus einer Stromquelle mit den Merkmalen des Oberbegriffs des Patentanspruches 1.

Die Versorgung von elektrischen Verbrauchern aus einer Stromquelle mittels einer Pulsmodulation findet insbesondere in Kraftfahrzeugen statt. Aufgrund des stetig zunehmenden Einsatzes elektrischer und elektronischer Einrichtungen im Kraftfahrzeug tritt das Problem auf, daß die zur Verfügung stehende Stromquelle, das heißt die vom Verbrennungsmotor angetriebene Lichtmaschine, die Spitzen der Leistungsanforderung häufig nicht mehr bedienen kann. Daher muß elektrische Energie in der Fahrzeugbatterie als Puffer zwischen gespeichert werden, um hieraus während der Leistungsspitzen entnommen werden zu können. Nachteilig hieran ist jedoch, daß der damit verbundene Leistungsdurchsatz durch die Batterie deren Lebensdauer stark herabsetzt.

Aus der DE 199 55 406 A1 ist eine gattungsgemäße Steuerungseinrichtung bekannt, bei der eine Mehrzahl von grundsätzlich unabhängig voneinander arbeitenden und jeweils für einen der Verbraucher zuständigen Treiberschaltungen mit Synchronisationssignalen zur koordinierten Steuerung des Gesamtstroms angesteuert werden. Dabei werden für jeden Verbraucher offenbar individuelle Synchronisationssignale erzeugt und weitergeleitet, was bei räumlich voneinander entfernten Treiberstufen relativ uneffizient ist.

Vor diesem Hintergrund war es Aufgabe der vorliegenden Erfindung, Mittel zur Steuerung der Leistungsversorgung von elektrischen Verbrauchern bereitzustellen, mit denen insbesondere die variierenden Leistungsanforderungen in einem Kraftfahrzeug effizient bedient werden können.

Diese Aufgabe wird durch eine Einrichtung mit den Merkmalen des Anspruchs 1 gelöst. Vorteilhafte Ausgestaltungen sind in den Unteransprüchen enthalten. Erfindungsgemäß ist eine Einrichtung zur Steuerung der Versorgung von elektrischen Verbrauchern mit elektrischer Leistung aus einer Stromquelle vorgesehen, wobei die Einrichtung einen Eingang für den Anschluß einer Stromquelle sowie mindestens zwei Ausgänge für den Anschluß von Verbrauchern aufweist. Weiterhin ist die Einrichtung dazu eingerichtet, die elektrischen Leistungen an den Ausgängen jeweils pulsmoduliert bereitzustellen, wobei die Pulsmodulationen von mindestens einem ersten und einem zweiten der Ausgänge so koordiniert werden, daß es einen ersten Zeitraum gibt, zu dem nur der erste der beiden Ausgänge einen Leistungsimpuls erhält, und daß es einen zweiten Zeitraum gibt, zu dem nur der zweite der beiden Ausgänge einen Leistungsimpuls erhält.

Die Einrichtung enthält für jeden ihrer Ausgänge eine eigene Treiberschaltung, wobei jede der Treiberschaltungen aus einer am Eingang der Einrichtung von einer Stromquelle bereitgestellten Leistung eine pulsmodulierte Leistung am zugehörigen Ausgang der Einrichtung erzeugen kann. Weiterhin enthält die Einrichtung eine Synchronisationsschaltung, welche mit den genannten Treiberschaltungen verbunden ist und diesen ein Synchronisationssignal bereitstellen kann. Mit Hilfe des Synchronisationssignals ist es dann den ansonsten unabhängig arbeitenden Treiberschaltungen möglich, ihre Pulsmodulationen so aufeinander abzustimmen, daß die Leistungsentnahme aus der Stromquelle möglichst gleichmäßig wird.

Das von der Synchronisationsschaltung abgegebene Synchronisationssignal enthält eine zeitliche Folge von Identifikatoren (zum Beispiel unterschiedlich hohe Spannungen). Die Treiberschaltungen sind dazu eingerichtet, auf die Identifikatoren unterschiedlich zu reagieren. Das heißt, daß zum Beispiel eine erste der Treiberschaltungen einen Leistungsimpuls bei Auftreten eines ersten Identifikators im Synchronisationssignal beginnt und bei Auftreten eines zweiten Identifikators beendet, während eine andere Treiberschaltung einen Leistungsimpuls bei Auftreten des zweiten Identifikators beginnt und bei Auftreten eines dritten Identifikators beendet. Mit Hilfe der Identifikatoren ist es somit möglich, daß die Treiberschaltungen ihre Leistungsimpulse synchronisiert und mit definierter Phasenbeziehung abgeben.

Im Rahmen eines Verfahrens zur Steuerung der Versorgung von elektrischen Verbrauchern mit elektrischer Leistung aus einer Stromquelle werden die Leistungen zu den Verbrauchern jeweils mittels einer Pulsmodulation transportiert. Bei Anwendungen im Gebiet der Kraftfahrzeugtechnik kann es sich bei der Stromquelle insbesondere um die Lichtmaschine (Generator) des Kraftfahrzeugs handeln. Die Verbraucher sind typischerweise ohmsche und/oder induktive Lasten wie Klimageräte, Ventilatoren, Elektromotoren oder Leuchtmittel. Selbstverständlich können auch noch andere Verbraucher an der Stromquelle angeschlossen sein, deren Versorgung von dem Verfahren nicht unmittelbar berührt wird. Bei der Pulsmodulation wird ein Gleichstrom bzw. eine Gleichspannung in Impulse zerlegt, wobei über die Form der Impulse (z. B. die Breite bei der "Pulsweitenmodulation") die im Mittel übertragene Leistung gesteuert werden kann. Typischerweise erzeugt eine Pulsmodulation ein im zeitlichen Verlauf rechteckförmiges Signal, welches zwischen einem Amplitudenmaximum und dem Wert Null hin und her springt.

Dabei wird die Pulsmodulationen in den Übertragungswegen zu mindestens einem ersten und einem zweiten der Verbraucher so koordiniert, daß es einen ersten Zeitraum gibt, zu dem nur der erste der beiden Verbraucher einen Leistungsimpuls erhält, und daß es einen zweiten Zeitraum gibt, zu dem nur der zweite der beiden Verbraucher einen Leistungsimpuls erhält. Hinsichtlich der Lage der Leistungsimpulse für die übrigen Verbraucher besteht im Prinzip keine Einschränkung, d.h. diese können auch in den genannten Zeiträumen liegen. Vorzugsweise kehren die genannten Zeiträume periodisch wieder. Insbesondere kann es einen ersten und einen zweiten Zeitraum der genannten Art in jeder Periode der Pulsmodulationen geben.

Mit dem beschriebenen Verfahren ist es möglich, die Leistungsentnahme aus der Stromquelle zu vergleichmäßigen und Entnahmespitzen zu reduzieren. Dies gelingt durch die wechselseitige Koordination der Pulsmodulationen zu mindestens zwei Verbrauchern, wobei durch die Koordination dafür gesorgt wird, daß die Leistungsübertragung zu den Verbrauchern möglichst alternierend bzw. zu unterschiedlichen Zeiten stattfindet. Die Zeiträume, zu denen beide Verbraucher gleichzeitig aus der Stromquelle Leistung entnehmen, werden hierdurch verringert und die gesamte Leistungsentnahme aus der Stromquelle wird zeitlich besser verteilt. Im Vergleich zu Versorgungsverfahren in Kraftfahrzeugen, bei denen alle Leistungsimpulse zu Verbrauchern gleichzeitig abgegeben werden, kann die Spitzenbelastung der Stromquelle bei gleichbleibender Durchschnittsbelastung deutlich gesenkt werden, so daß Rückgriffe auf die Fahrzeugbatterie seltener sind oder ganz vermieden werden können. Letzteres kommt der Lebensdauer der Batterie zugute und senkt damit die Unterhaltungskosten des Kraftfahrzeuges.

Die mit dem beschriebenen Verfahren erzielbaren Vorteile einer Vergleichmäßigung der Leistungsentnahme aus der Stromquelle werden natürlich besonders groß, wenn die Koordination der Pulsmodulationen nicht nur für zwei der Verbraucher, sondern für alle Verbraucher, die pulsmoduliert versorgt werden, durchgeführt wird. Das heißt, daß für jedes beliebige betrachtete Paar von zwei Verbrauchern es jeweils einen ersten bzw. einen zweiten Zeitraum gibt, in welchem nur der erste bzw. nur der zweite der beiden betrachteten Verbraucher einen Leistungsimpuls erhält.

Um die Koordination der Pulsmodulationen von mindestens zwei Verbrauchern durchzuführen, werden die einzelnen Pulsmodulationen miteinander synchronisiert. Das heißt, daß die Frequenzen der jeweiligen Pulsmodulationen gleich sind bzw. in einem ganzzahligen Verhältnis zueinander stehen. Auf diese Weise kann zum Beispiel der Leistungsimpuls eines zweiten Verbrauchers in die Leistungslücke eines ersten Verbrauchers gelegt werden, wobei die Synchronizität der Pulsmodulationen dafür sorgt, daß eine derartige Phasenbeziehung sich periodisch wiederholt.

Gemäß einer bevorzugten Ausführungsform des Verfahrens werden die Pulsmodulationen aller übertragenen Leistungen so koordiniert, daß das (in Bezug auf den zeitlichen Verlauf gesehene) Maximum der der Stromquelle insgesamt entnommenen Leistung möglichst klein wird. Mit anderen Worten werden die zu den Verbrauchern übertragenen Leistungsimpulse möglichst gleichmäßig und mit möglichst geringem Überlapp über die Zeitachse verteilt, so daß die Summe aller Leistungsimpulse, welche der der Stromquelle momentan entnommenen Leistung entspricht, über den betrachteten Zeitraum hinweg ein möglichst kleines Amplitudenmaximum hat. Die von der Stromquelle aufzubringende Spitzenleistung wird somit minimiert. In einem Kraftfahrzeug bedeutet dies, daß möglichst wenig auf die Pufferleistung einer Batterie zurückgegriffen werden muß, was deren Lebensdauer entsprechend verlängert.

Besonders bevorzugt ist es, wenn die Pulsmodulationen aller übertragenen Leistungen so koordiniert werden, daß zu jedem Zeitpunkt höchstens ein Verbraucher einen Leistungsimpuls erhält. In diesem Falle gibt es keinen Überlapp zwischen Leistungsimpulsen, so daß die von der Stromquelle bereitzustellende Spitzenleistung allein durch den leistungsstärksten der angeschlossenen Verbraucher bestimmt wird.

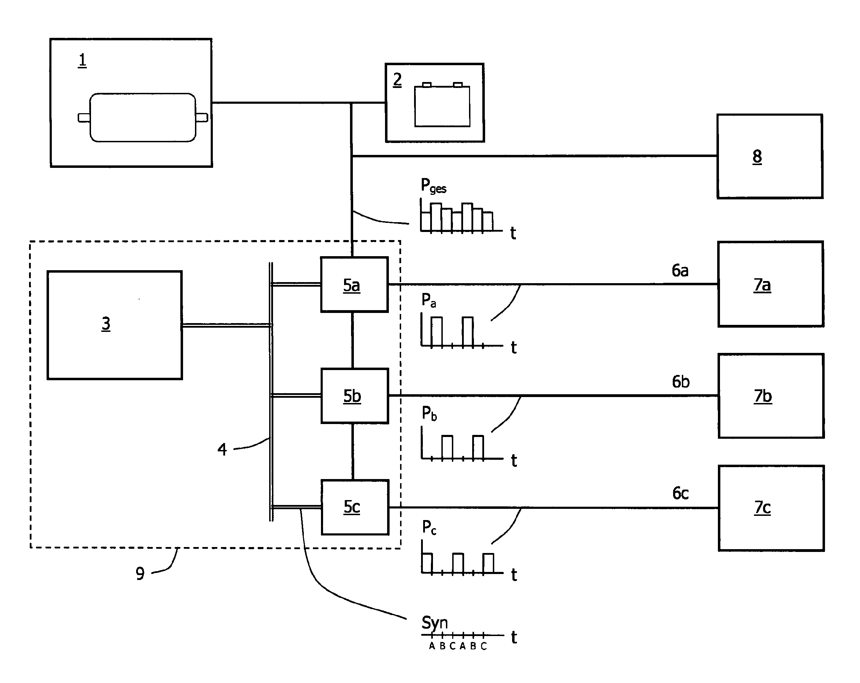

Im Folgenden wird die Erfindung anhand der Figur beispielhaft näher erläutert. Die einzige Abbildung zeigt schematisch das Stromversorgungssystem eines Kraftfahrzeuges mit einer erfindungsgemäßen Einrichtung.

Zunächst soll mit Hilfe der Figur die Stromversorgung in einem Kraftfahrzeug gemäß dem Stand der Technik erläutert werden. Als Stromquelle für alle elektrischen Verbraucher dient im Kraftfahrzeug eine Lichtmaschine 1 (Generator), die zur Stromerzeugung von dem Verbrennungsmotor (nicht dargestellt) angetrieben wird. Die Lichtmaschine 1 gibt die erzeugte Leistung über entsprechende Leitungen an die elektrischen Verbraucher im Kraftfahrzeug ab. Als Verbraucher sind in der Figur schematisch ein Klimagerät 7a, ein elektrischer Motor 7b, ein Leuchtmittel 7c sowie sonstige Verbraucher 8 angedeutet.

Die von allen Verbrauchern der Lichtmaschine 1 entnommene Leistung muß im zeitlichen Mittel der Leistung entsprechen, die die Lichtmaschine 1 erzeugen kann. Um eine Überlastung der Lichtmaschine 1 zu verhindern, muß daher typischerweise die Leistungszufuhr zu den Verbrauchern gesteuert bzw. begrenzt werden. Ein möglicher Weg hierzu besteht darin, die Leistungsübertragung zu einem Verbraucher einer Pulsmodulation zu unterwerfen. Bei der Pulsmodulation wird die Leistung in einzelnen Leistungsimpulsen übertragen. Bei der in der Figur dargestellten Einrichtung springen die zu den Verbrauchern 7a, 7b, 7c übertragenen Leistungen Pₐ, P_{b}, P_{c} rechteckförmig zwischen einem Maximum (entsprechend der vollen Spannung der Lichtmaschine) und einem Minimum von Null hin und her. Eine derartige Pulsmodulation ist insbesondere für Verbraucher möglich, die ohmsche und induktive Lasten darstellen, also zum Beispiel zur Regelung der Dimmung von Licht, der Drehzahl eines elektrischen Motors und dergleichen. Verbraucher, die nicht pulsmoduliert versorgt werden können oder sollen, sind in der Figur im Block 8 zusammengefaßt. Sie spielen im Rahmen der vorliegenden Erfindung keine weitere Rolle.

Nachfolgend soll speziell die Pulsweitenmodulation betrachtet werden, bei der die Breite der Impulse variiert wird. Durch das Verhältnis der Breite eines Leistungsimpulses ("Spannung-an") zur Breite der Lücken zwischen zwei Leistungsimpulsen ("Spannung-aus"), das heißt den sogenannten Arbeitstakt der jeweiligen Pulsweitenmodulation, kann die Größe der im Mittel übertragenen Leistung festgelegt werden. Da die von der Lichtmaschine 1 an die Verbraucher 7a, 7b, 7c bereitzustellende Leistung der Summe der Einzelleistungen entspricht, kann durch die Pulsmodulation entsprechend auch die mittlere Belastung der Lichtmaschine 1 geregelt werden.

Beim Stand der Technik findet jedoch keine Regelung der momentanen Leistungsaufnahme aus der Lichtmaschine 1 statt. Das heißt, daß typischerweise die Pulsmodulationen zu den Verbrauchern 7a, 7b, 7c alle gleichzeitig einen Leistungsimpuls anfordern bzw. eine Leistungspause haben. Der momentane Spitzenwert der Leistungsabgabe durch die Lichtmaschine 1 wird daher durch die Summe aller Leistungsabgaben zu den Verbrauchern 7a, 7b, 7c bestimmt. Da dieser Spitzenwert in der Regel über der Leistungsfähigkeit der Lichtmaschine 1 liegt, muß auf eine mit der Lichtmaschine 1 und dem Bordnetz gekoppelte Batterie 2 als Puffer zurückgegriffen werden, damit diese in den Leistungsspitzen die erforderliche Differenzleistung bereitstellt. Nachteilig hieran ist jedoch, daß die damit verbundene Beanspruchung der Batterie deren Lebensdauer signifikant herabsetzt.

Zur Behebung dieser Problematik wird bei dem in der Figur dargestellten System eine Koordination der Pulsmodulationen auf den Leitungen 6a, 6b, 6c zu den Verbrauchern 7a, 7b, 7c vorgenommen. Dabei werden die Pulsmodulationen so synchronisiert bzw. koordiniert, daß wie in der Figur dargestellt möglichst immer nur ein Leistungsimpuls zu einer bestimmten Zeit erzeugt wird, sich die Leistungsimpulse auf den Leistungen 6a, 6b, 6c also nicht oder möglichst wenig überlappen. Hierdurch kann die Leistungsentnahme aus der Lichtmaschine 1 möglichst gleichmäßig über die Zeit verteilt werden, so daß die Belastungsspitzen entsprechend sinken. Bei dem in der Figur dargestellten Beispielsfall können die Leistungsimpulse der einzelnen übertragenen Leistungen Pₐ, P_{b}, P_{c} gerade lückenlos aneinandergereiht werden, so daß sich für die Lichtmaschine 1 eine gesamte Leistungsentnahme P_{ges} (ohne Berücksichtigung der Verbraucher 8) ergibt, bei welcher die Spitzenleistung auf ein Minimum abgesenkt ist. Dementsprechend wird die Batterie 2 in einem minimalen Umfang (idealerweise gar nicht) benötigt, was deren Lebensdauer entsprechend erhöht. Eine Leistungssteuerung der oben beschriebenen Art ist insbesondere für Verbraucher wie beispielsweise Lasten aus Klimageräten interessant, die verhältnismäßig lange Zeitkonstanten und ein Potential für eine flexible Regelung aufweisen.

Die in der Figur dargestellte technische Realisierung des vorstehend beschriebenen Verfahrens beinhaltet eine Einrichtung 9 mit einem Eingang für die Stromquelle 1, Ausgängen 6a, 6b, 6c für den Anschluß der Verbraucher, und separaten Treiberschaltungen 5a, 5b, 5c für jeden der pulsweitenmoduliert versorgten Verbraucher 7a, 7b, 7c. Die Treiberschaltungen sind alle an die Lichtmaschine 1 angeschlossen und erzeugen an ihren Ausgangsleitungen 6a, 6b, 6c jeweils pulsweitenmodulierte Leistungen Pₐ, P_{b}, P_{c}. Die Treiberschaltungen 5a, 5b, 5c können räumlich verteilt an verschiedenen Stellen im Kraftfahrzeug angeordnet sein, sie können jedoch auch zentral in einem einzigen Modul realisiert werden.

Die Treiberschaltungen 5a, 5b, 5c sind weiterhin an einen Kommunikationsbus 4 (zum Beispiel LIN, CAN - Controller Area Network) angeschlossen. Ebenfalls an den Bus 4 angeschlossen ist eine zur Einrichtung 9 gehörende Synchronisationsschaltung 3, welche ein Synchronisationssignal Syn auf den Bus 4 gibt. Dieses Synchronisationssignal Syn kann dann von den Treiberschaltungen 5a, 5b, 5c verwendet werden, um ihre Pulsmodulationen in der vorgeschlagenen Weise zu koordinieren.

Das Synchronisationssignal Syn besteht vorzugsweise wie in der Figur angedeutet aus einer periodischen Folge von Identifikatoren A, B, C, die zum Beispiel durch unterschiedliche Spannungspegel und/oder durch einen binären Code definiert werden können. Anhand der Identifikatoren kann jede der Treiberschaltungen 5a, 5b, 5c ihren zugehörigen Triggerzeitpunkt erkennen, zu dem sie zum Beispiel einen Leistungsimpuls beginnt oder beendet. Die Information, auf welchen der Identifikatoren A, B, C eine Treiberschaltung reagiert, kann entweder vorab in der Treiberschaltung hinterlegt sein oder den Treiberschaltungen 5a, 5b, 5c jeweils individuell von der Synchronisationsschaltung 3 (über den Kommunikationsbus 4 oder einen anderen Bus) mitgeteilt werden. Im dargestellten Beispiel schaltet
- die Treiberstufe 5a ihren Leistungsimpuls beim Identifikator A ein und beim Identifikator B aus;
- die Treiberschaltung 5b ihren Leistungsimpuls beim Identifikator B ein und beim Identifikator C aus;
- die Treiberschaltung 5c ihren Leistungsimpuls beim Identifikator C ein und beim Identifikator A aus.

Wenn die Höhe der Leistungsimpulse Pₐ, P_{b}, P_{c} zum Beispiel 90, 80 und 70 Watt beträgt, beträgt das Amplitudenmaximum der von der Lichtmaschine 1 bereitzustellenden Gesamtleistung P_{ges} 90 Watt. Bei einer gleichzeitigen Aktivität aller Leistungsimpulse gemäß dem Stand der Technik betrüge dagegen das Leistungsmaximum 240 Watt.

Das Synchronisationssignal Syn der Synchronisationsschaltung 3 kann selbstverständlich mehr als die dargestellten drei Identifikatoren enthalten. Die Anzahl der Identifikatoren kann dabei fest vorgegeben oder je nach Situation eingestellt werden. Des Weiteren können die Synchronisationssignale für verschiedene Lasten überlappend sein. Ferner kann die Frequenz der Signale festliegen oder je nach Strategie variieren.

## Patentansprüche

1. Einrichtung (9) zur Steuerung der Versorgung von Verbrauchern (7a, 7b, 7c) mit elektrischer Leistung (Pa, Pb, Pc) aus einer Stromquelle (1), enthaltend einen Eingang für den Anschluss einer Stromquelle (1) sowie mindestens zwei Ausgänge (6a, 6b, 6c) für den Anschluss von Verbrauchern (7a, 7b, 7c), wobei diese Einrichtung dahingehend ausgebildet ist, die Leistungen (Pa, Pb, Pc) an den Ausgängen (6a, 6b, 6c) jeweils pulsmoduliert bereitzustellen, wobei die Pulsmodulationen an mindestens einem ersten und einem zweiten der Ausgänge (6a, 6b, 6c) so koordiniert werden, dass es einen ersten Zeitraum gibt, zu dem nur der erste der beiden Ausgänge (6a, 6b) einen Leistungsimpuls erhält, und dass es einen zweiten Zeitraum gibt, zu dem nur der zweite der beiden Ausgänge (6c) einen Leistungsimpuls erhält,
**dadurch gekennzeichnet, dass**
die Einrichtung (9) für jeden Ausgang (6a, 6b, 6c) eine Treiberschaltung (5a, 5b, 5c) enthält, welche aus einer am Eingang der Einrichtung bereitgestellten Leistung (Pges) eine pulsmodulierte Ausgangsleistung (Pa, Pb, Pc) am zugehörigen Ausgang (6a, 6b, 6c) erzeugt, wobei die Einrichtung (9) eine Synchronisationsschaltung (3) enthält, welche mit den Treiberschaltungen (5a, 5b, 5c) verbunden ist und diesen ein Synchronisationssignal (Syn) bereitstellt, wobei dieses Synchronisationssignal (Syn) eine zeitliche Folge von Identifikatoren (A, B, C) enthält und die Treiberschaltungen (5a, 5b, 5c) dazu eingerichtet sind, auf die Identifikatoren unterschiedlich zu reagieren.

2. Einrichtung nach Anspruch 1,
**dadurch gekennzeichnet, daß**
diese dahingehend ausgebildet ist, dass die Koordination der Pulsmodulationen für alle Paare von Verbrauchern (7a, 7b, 7c) erfolgt.

3. Einrichtung nach Anspruch 1 oder 2,
**dadurch gekennzeichnet, daß**
diese dahingehend ausgebildet ist, dass die Pulsmodulationen aller übertragenen Leistungen (Pa, Pb, Pc) so koordiniert werden, dass das Maximum der der Stromquelle (1) entnommenen Leistung (P_{ges}) möglichst klein wird.

4. Einrichtung nach mindestens einem der Ansprüche 1 bis 3, **dadurch gekennzeichnet, daß**
diese dahingehend ausgebildet ist, dass die Pulsmodulationen aller übertragenen Leistungen (Pa, Pb, Pc) so koordiniert werden, dass zu jedem Zeitpunkt höchstens ein Verbraucher (7a, 7b, 7c) einen Leistungsimpuls erhält.

5. Einrichtung nach mindestens einem der Ansprüche 1 bis 4, **dadurch gekennzeichnet, daß**
diese dahingehend ausgebildet ist, dass die Pulsmodulationen jeweils rechteckförmig zwischen einem vorgegebenen Amplitudenmaximum und Null variieren.

## Claims

1. Device (9) for controlling the supply of electrical power (Pa, Pb, Pc) from a power source (1) to loads (7a, 7b, 7c), comprising an input for the connection of a power source (1) and at least two outputs (6a, 6b, 6c) for the connection of loads (7a, 7b, 7c), with this device being designed to the effect that the powers (Pa, Pb, Pc) are provided at the outputs (6a, 6b, 6c) in a pulse-modulated manner in each case, with the pulse modulations at at least a first and a second of the outputs (6a, 6b, 6c) being coordinated such that there is a first time period in which only the first of the two outputs (6a, 6b) receives a power pulse, and that there is a second time period in which only the second of the two outputs (6c) receives a power pulse,
**characterized in that**
the device (9) comprises a driver circuit (5a, 5b, 5c) for each output (6a, 6b, 6c), which driver circuit generates a pulse-modulated output power (Pa, Pb, Pc) at the associated output (6a, 6b, 6c) from a power (Pges) which is provided at the input of the device, with the device (9) comprising a synchronization circuit (3) which is connected to the driver circuits (5a, 5b, 5c) and provides a synchronization signal (Syn) to the said driver circuits, with this synchronization signal (Syn) comprising a time sequence of identifiers (A, B, C) and the driver circuits (5a, 5b, 5c) being designed to respond to the identifiers in different ways.

2. Device according to Claim 1,
**characterized in that**
it is designed to the effect that the pulse modulations are coordinated for all pairs of loads (7a, 7b, 7c).

3. Device according to Claim 1 or 2,
**characterized in that**
it is designed to the effect that the pulse modulations of all the transmitted powers (Pa, Pb, Pc) are coordinated such that the maximum power (Pges) drawn from the power source (1) is as small as possible.

4. Device according to at least one of Claims 1 to 3, **characterized in that**
it is designed to the effect that the pulse modulations of all the transmitted powers (Pa, Pb, Pc) are coordinated such that, at each time point, at most one load (7a, 7b, 7c) receives a power pulse.

5. Device according to at least one of Claims 1 to 4, **characterized in that**
it is designed to the effect that the pulse modulations each vary in a rectangular manner between a predefined amplitude maximum and zero.

## Revendications

1. Dispositif (9) pour commander l'alimentation de charges (7a, 7b, 7c) en puissance électrique (Pa, Pb, Pc) à partir d'une source de courant (1), comprenant une entrée pour le raccordement d'une source de courant (1) ainsi qu'au moins deux sorties (6a, 6b, 6c) pour le raccordement de charges (7a, 7b, 7c), ce dispositif étant configuré pour mettre à disposition les puissances (Pa, Pb, Pc) aux sorties (6a, 6b, 6c) à chaque fois modulées par impulsions, les modulations par impulsions sur au moins une première et une deuxième des sorties (6a, 6b, 6c) étant coordonnées de telle sorte qu'il existe un premier intervalle de temps pendant lequel seule la première des deux sorties (6a, 6b) reçoit une impulsion de puissance et qu'il existe un deuxième intervalle de temps pendant lequel seule la deuxième des deux sorties (6c) reçoit une impulsion de puissance,
**caractérisé en ce que**
le dispositif (9) comprend pour chaque sortie (6a, 6b, 6c) un circuit d'attaque (5a, 5b, 5c) qui génère, à partir d'une puissance (Pges) mise à disposition à l'entrée du dispositif, une puissance de sortie modulée par impulsions (Pa, Pb, Pc) sur la sortie (6a, 6b, 6c) correspondante, le dispositif (9) comprenant un circuit de synchronisation (3) qui est relié avec les circuits d'attaque (5a, 5b, 5c) et met à disposition de ceux-ci un signal de synchronisation (Syn), ce signal de synchronisation (Syn) contenant une séquence dans le temps d'identificateurs (A, B, C) et les circuits d'attaque (5a, 5b, 5c) étant conçus pour réagir différemment aux identificateurs.

2. Dispositif selon la revendication 1, **caractérisé en ce que** celui-ci est configuré de telle sorte que la coordination des modulations par impulsions s'effectue pour toutes les paires de charges (7a, 7b, 7c).

3. Dispositif selon la revendication 1 ou 2, **caractérisé en ce que** celui-ci est configuré de telle sorte que les modulations par impulsions de toutes les puissances (Pa, Pb, Pc) transmises sont coordonnées de manière à ce que la puissance (Pges) maximale prélevée de la source de courant (1) soit la plus faible possible.

4. Dispositif selon au moins l'une des revendications 1 à 3, **caractérisé en ce que** celui-ci est configuré de telle sorte que les modulations par impulsions de toutes les puissances (Pa, Pb, Pc) transmises sont coordonnées de manière à ce qu'à chaque instant, au maximum une charge (7a, 7b, 7c) reçoive une impulsions de puissance.

5. Dispositif selon au moins l'une des revendications 1 à 4, **caractérisé en ce que** celui-ci est configuré de telle sorte que les modulations par impulsions varient à chaque fois de manière rectangulaire entre une amplitude maximale prédéfinie et zéro.
